# EUROPÄISCHE PATENTANMELDUNG

(11) **EP 4 785 782 A1**
(43) Veröffentlichungstag der Anmeldung: **05.08.2026**
(21) Anmeldenummer: 26155351.5
(22) Anmeldetag: 30.01.2026
(51) Int. Cl.: A01K 3/00, E01F 13/02, E04H 17/02

(54) **VERSTÄRKTER MOBILER WEIDEZAUN**

(30) Priorität: 31.01.2025 DE 102025103594
(71) Anmelder: Firma Johan Cremers, 52511 Geilenkirchen (DE)
(72) Erfinder: Cremers, Johan, 52511 Geilenkirchen (DE); Baumgart, Gregor, 41749 Viersen (DE)
(74) Vertreter: Hannke, Christian

(57) **Zusammenfassung**

Die Erfindung betrifft ein Zaunnetz (2) für einen mobilen Weidezaun (1), wobei das Zaunnetz (2) mehrere horizontale Netzlitzen (22) umfasst, welche zueinander parallel angeordnet sind und sich über die gesamte horizontale Länge des Zaunnetzes (2) erstrecken und das Zaunnetz (2) weitergehend mehrere quer zu den Netzlitzen (22) verlaufende Netzstrippen (23) umfasst, welche zueinander parallel angeordnet sind und sich von der obersten (22a) bis zur untersten Netzlitze (22f) erstrecken, wobei die Netzlitzen (22) und -strippen (23) an den Kreuzungspunkten (K) der Netzlitzen (22) mit den Netzstrippen (23) miteinander verbunden sind und die Netzlitzen (22) zumindest aus einem flexiblen Kunststoffgarn bestehen. Die Erfindung ist dadurch gekennzeichnet, dass die Netzstrippen (23) aus einem faserverstärkten Kunststoff bestehen, wobei sich die Fasern (23a) über die gesamte Länge (L) der Netzstrippen (23) erstrecken.

## Beschreibung

Die Erfindung betrifft ein Zaunnetz für einen mobilen Weidezaun, wobei das Zaunnetz mehrere horizontale Netzlitzen umfasst, welche zueinander parallel angeordnet sind und sich über die gesamte horizontale Länge des Zaunnetzes erstrecken, und das Zaunnetz weitergehend mehrere, quer zu den Netzlitzen verlaufenden Netzstrippen umfasst, welche zueinander parallel angeordnet sind und sich von der obersten bis zur untersten Netzlitze erstrecken, wobei die Netzlitzen und -strippen an den Kreuzungspunkten der Netzlitzen mit den Netzstrippen miteinander verbunden sind und die Netzlitzen zumindest aus einem flexiblen Kunststoffgarn bestehen. Die Erfindung betrifft außerdem einen mobilen Weidezaun umfassend zumindest ein Zaunnetz und zumindest zwei Zaunpfähle.

Mobile Weidezäune werden im landwirtschaftlichen Sektor zum Beispiel zur Umzäunung von Tieren eingesetzt. Weitere Einsatzgebiete solcher mobilen Weidezäune sind Abgrenzungen in Skigebieten, an Baustellen oder im privaten Bereich. Es ist dabei auch möglich, die mobilen Zäune dauerhaft stehend zu verwenden. Die mobilen Zäune bestehen aus Zaunpfählen, die in der Erde mit Bodennägeln befestigt werden, und einem Zaunnetz. Das Zaunnetz besteht aus horizontal verlaufenden Netzlitzen und quer dazu verlaufenden Netzstrippen. Die Netzlitzen bestehen meist aus gezwirntem oder geflochtenem Kunststoffmonofilament, bevorzugt Polyethylen (PE), Polypropylen (PP) oder Polyamid (PA). Die quer dazu verlaufenden Netzstrippen bestehen entweder aus demselben Material oder auch aus Polyamid. Auch können die Netzstrippen aus einem extrudierten Kunststoffprofil bestehen, z.B. aus Polyamid. Alternativ kann für diese Kunststoffprofile auch Polypropylen oder High Density Polyethylen (HDPE) verwendet werden. Im Vergleich zur bekannten Variante mit ausschließlich gezwirnten oder geflochtenen Kunststoffmonofilament, sowohl als Netzstrippen oder auch Netzlitzen, haben die extrudierten Netzlitzen den Vorteil, dass der Zaun etwas stabiler steht und ein Durchhängen des Zaunnetzes zwischen den Zaunpfählen reduziert wird. Der Nachteil dieser extrudierten Kunststoffstrippen ist jedoch, dass das Zaunnetz und damit auch der gesamte mobile Weidezaun im aufgerollten Zustand sehr unhandlich und schwer wird. Dies ist vor allem durch das Eigengewicht der extrudierten Kunststoffstrippen bedingt. Die extrudierten Kunststoffstrippen sind zwar steifer als das gezwirnte oder geflochtene Kunststoffmonofilament, sie sind jedoch insgesamt immer noch recht weich. Dadurch wird zwar die Standfestigkeit des Zaunes verbessert, die einzelnen Netzmaschen des Zaunnetzes sind jedoch noch immer so weich und wenig aufgespannt, dass kleine Tiere beim Versuch, durch das Zaunnetz zu schlüpfen, sich darin verfangen können. Bei durchhängenden Zaunnetzen, die mit einer elektrischen Spannung als Elektrozaun betrieben werden, kann ein Durchhängen des Zaunnetzes außerdem zum Kontakt der stromführenden Litzen mit dem Boden oder nah am Zaun angeordneten Pflanzen oder Gegenständen kommen. Dies führt dann zu einem unerwünschten Spannungsabfall am Elektrozaun. Auch ist das höhere Materialgewicht der Strippen signifikant, sodass das Gesamtgewicht des Zaunnetzes größer wird. Zusammen mit der größeren Dicke der Netzstrippen und dem damit bedingten größeren Volumen des zusammengerollten Zaunnetzes resultiert dies in einer verschlechterten Transportierbarkeit des Zaunnetzes bzw. des mobilen Weidezauns. Dies insbesondere für die Nutzung des Zauns in schwer zugänglichen Gebieten nachteilig, wo z.B. ein Transport des mobilen Weidezauns per Hand oder per Hubschrauber erforderlich ist.

Es ist daher die Aufgabe der vorliegenden Erfindung die Steifigkeit der mobilen Weidezäune und gleichzeitig die Transportfähigkeit des mobilen Weidezauns zu verbessern.

Diese Aufgabe wird gelöst durch ein Zaunnetz für einen mobilen Weidezaun, wobei das Zaunnetz mehrere horizontale Netzlitzen umfasst, welche zueinander parallel angeordnet sind und sich über die gesamte horizontale Länge des Zaunnetzes erstrecken, und das Zaunnetz weitergehend mehrere quer zu den Netzlitzen verlaufenden Netzstrippen umfasst, welche zueinander parallel angeordnet sind und sich von der obersten bis zur untersten Netzlitze erstrecken, wobei die Netzlitzen und Strippen an den Kreuzungspunkten der Netzlitzen mit den Netzstrippen miteinander verbunden sind und die Netzlitzen zumindest aus einem flexiblen Kunststoffgarn bestehen. Die Erfindung ist dadurch gekennzeichnet, dass die Netzstrippen aus einem faserverstärkten Kunststoff bestehen, wobei sich die Fasern über die gesamte Länge der Netzstrippen erstrecken.

Erfindungsgemäß werden die Netzstrippen aus einem faserverstärkten Kunststoff hergestellt. Durch die Erstreckung der Verstärkungsfasern über die gesamte Länge der Netzstrippen, wird eine sehr hohe Biegesteifigkeit der Netzstrippen realisiert. Auf Grund der Erstreckung der Fasern über die gesamte Länge der Netzstrippen handelt es sich bei den Verstärkungsfasern um Endlosfasern. Diese Endlosfasern sind abzugrenzen von Kurzfasern oder Langfasern, wobei die Kurzfasern eine Länge bis zu 5 mm aufweisen und die Langfasern eine Länge zwischen 5 und 25 mm aufweisen können. Demgegenüber erstrecken sich Endlosfasern über die gesamte Bauteillänge. Durch die Verwendung von Endlosfasern kann im Vergleich zur Verwendung von Kurz- oder Langfasern eine deutlich höhere Biegesteifigkeit und eine weit stärkere Gewichtsreduktion erzielt werden. Auch reduzieren die Endlosfasern im Vergleich zu Kurz- oder Langfasern das insgesamt benötigte Netzstrippenvolumen für die nötige Biegesteifigkeit, sodass die erfindungsgemäßen Netzstrippen besonders dünn ausgeführt werden können. Zum einen wird so das Zaunnetz stabiler. Insbesondere werden die einzelnen Maschen des Zaunnetzes stabilisiert und offengehalten. Dadurch wird das Risiko des Verfangens von Tieren reduziert. Der fertige Weidezaun steht mit dem erfindungsgemäßen Zaunnetz insgesamt stabiler, wodurch auch etwaige stromführende Litzen den Boden nicht so schnell berühren und einen Spannungsabfall erzeugen würden. Durch das reduzierte Gewicht der Netzstrippen und das reduzierte Volumen der Netzstrippen im Vergleich zum Stand der Technik, ist der Zaun im aufgerollten Zustand deutlich kompakter und leichter und kann somit einfacher transportiert werden. Dies stellt gerade für den Transport in schwer zugängliche Gebiete, wie zum Beispiel alpine Weidegründe, einen großen Vorteil dar.

Durch die faserverstärkten Netzstrippen wird die Stabilität des Weidezauns erhöht, sodass es möglich ist den Abstand der Zaunpfähle im Weidezaun zu vergrößern. Pro gleichbleibender Zaunlänge werden bei gleichbleibender Zaunstabilität somit weniger Zaunpfähle benötigt, was den Weidezaun insgesamt leichter und günstiger macht und das Packvolumen weiter reduziert.

Durch die erfindungsgemäßen Netzstrippen ist es außerdem möglich den Weidezaun höher auszuführen ohne die Stabilität und Standfestigkeit des Zauns zu gefährden. Dies ist insbesondere für die Verwendung als Wolfsnetz vorteilhaft, welche eine höhe Höhe für die gewünschte Schutzwirkung aufweisen müssen.

Bevorzugt verlaufen die Netzstrippen vertikal. Die vertikal verlaufenden Netzstrippen bilden in diesem Fall mit den horizontal verlaufenden Netzlitzen einen rechten Winkel. Es ist jedoch auch denkbar, dass die Netzstrippen in einem anderen Winkel als 90° zu den horizontal verlaufenden Netzlitzen angeordnet sind.

Bevorzugt sind die Netzlitzen und Netzstrippen am Kreuzungspunkt durch ein Befestigungsmittel verbunden. Bevorzugt ist dieses Befestigungsmittel eine gemeinsame Kunststoffumspritzung, der sich überkreuzenden Netzlitze und Netzstrippe. Durch dieses Befestigungsmittel können die Netzlitzen und Netzstrippen in sehr einfacher und kosteneffizienter Weise zu einem Zaunnetz verbunden werden. Bevorzugt wird für die Kunststoffumspritzung HDPE oder PP verwendet. Diese Kunststoffe haften gut an den Kunststoffmaterialien der Netzlitzen und -strippen an und ermöglichen so eine besonders stabile Verbindung der Netzlitzen und - strippen miteinander.

Bevorzugt umfasst zumindest eine der oberen horizontal verlaufenden Netzlitzen ein stromleitendes Filament, bevorzugt ein Metalldraht. Die unterste Netzlitze umfasst dabei kein stromleitendes Filament. Hierdurch kann der mobilen Weidezaun unter elektrische Spannung gesetzt werden, sodass sich die Umzäunungswirkung für umzäunte Tiere verstärkt, und gleichzeitig die Gefahr eines Spannungsabfalls durch Erdung noch weiter reduziert werden. Der Begriff der untersten Netzlitze bezieht sich in diesem Fall auf die horizontal verlaufenden Netzlitze, die im aufgestellten Zustand des Weidezaunes sich am nächsten zum Boden befindet. Der Begriff der oberen Netzlitzen bezieht sich in diesem Fall auf sämtliche Netzlitzen von der obersten Netzlitze bis zur vorletzten Netzlitze, welche direkt benachbart und parallel über der untersten Netzlitze angeordnet ist. Es ist denkbar, dass stromleitende Filament auch aus einem anderen Material als eine Metalldraht zu fertigen. Insbesondere ist hier jedes stromleitende Material grundsätzlich denkbar.

Die Netzstrippen sind bevorzugt zylindrisch geformt und weisen einen kreisförmigen oder elliptischen Querschnitt senkrecht zur ihrer Zylinderlängsachse auf. Diese Form ist besonders vorteilhaft für eine Herstellung der Netzstrippen mit einem Pultrusionsverfahren. Mit diesen Pultrusionsverfahren lassen sich in besonders einfacher und kostensparender Methode faserverstärkte Kunststoffprofile mit Endlosfasern herstellen.

Bevorzugt ist der Kunststoff der horizontalen Netzlitzen ein gezwirntes oder geflochtenes Kunststoffmonofilament. Bevorzugt besteht dieses aus Polyethylen, Polypropylen und oder Polyamid.

Gemäß zumindest einer weiteren Ausführungsform sind die Fasern des faserverstärkten Kunststoffs Glasfasern, Carbonfasern, Basaltfasern, Hanffasern und/oder Flachsfasern. Aus Kostengründen werden Glasfasern als Verstärkungsfasern in den Netzstrippen bevorzugt. Es ist aber auch genauso denkbar, andere Fasermaterialien oder eine Kombination von Fasermaterialien zu verwenden. Hanffasern oder Flachsfasern bieten den Vorteil, dass diese nachhaltig gewonnen werden können und eine bessere Recyclingfähigkeit aufweisen. Damit kann die CO2-Bilanz des Zaunnetzes verbessert werden.

Gemäß einer weiteren Ausführungsform ist der Matrixkunststoff des faserverstärkten Kunststoffs ein duroplastischer Kunststoff oder ein thermoplastischer Kunststoff. Für duroplastische Kunststoffe werden die Materialien Polyester, Vinylester, Polyurethan oder Epoxidharzsysteme bevorzugt. Es ist jedoch auch denkbar, sämtliche anderen duroplastischen Kunststoffe einzusetzen. Als thermoplastische Kunststoffe werden bevorzugt Polyamid, Polyamid6 (PA6), Polyamid12 (PA12), Polymethylmethacrylat (PMMA) oder Polymethylmethacrylat9 (PMMA9) verwendet. Es ist jedoch auch denkbar, jeden anderen thermoplastischen Kunststoff zu verwenden. Bei der Auswahl des Kunststoffes ist insbesondere auf die Kombination aus Matrixkunststoff und Verstärkungsfaser zu achten. Hierbei ist insbesondere von Bedeutung, dass der gewählte Kunststoff eine gute Benetzung der Verstärkungsfaser ermöglicht. Bevorzugt können die Netzstrippen in einem Pultrusionsverfahren hergestellt werden. Bei thermoplastischen Matrixkunststoffen ist entweder ein klassisches Pultrusionsverfahren oder auch ein in-situ Pultrusionsverfahren möglich. Bei letzterem ergibt sich durch die bessere Haftung des Matrixkunststoffes an der Verstärkungsfaser sogar eine noch steifere Netzstrippe und damit noch eine weitere Verbesserung der Materialeigenschaften. Die in-situ Pultfusion ist zum Beispiel mit Polyamid6, Polyamid12 oder PMMA9 in Kombination mit verschiedenen Endlosfasern möglich. Alternativ zu einem klassischen pultrudierten Material kann für die Netzstrippen auch ein vorgefertigtes und bereits aktiviertes Towpreg eingesetzt werden. Bei einem Towpreg, auch Prepreg genannt, handelt es sich um vorgeformte Endlosfasern, welche bereits mit einem Matrixmaterial imprägniert wurden und anschließend als Halbzeug bereitstehen. Das Towpreg kann dann direkt in die gewünschte Form gebracht werden und anschließend durch eine Hitzebehandlung, gegebenenfalls im Autoklaven, ausgehärtet werden. Bevorzugt ist das Towpreg bereits mit Polyethylen, Polyamid oder Polypropylen ummantelt. Dieses Vorprodukt lässt sich dann direkt in Netzstrippen formen und aushärten, ohne dass ein Pultrusionsverfahren durchgeführt werden muss. Dies führt insbesondere zu einer deutlichen Vereinfachung der Zaunnetzherstellung, da keine Pultrusionsanlage in direkter Fertigungslinie mit einer Zaunnetzfertigungsmaschine benötigt wird.

Gemäß zumindest einer weiteren Ausführungsform weisen die Fasern des faserverstärkten Kunststoffs einen Anteil von 50 - 85 Volumenprozent am Gesamtvolumen des faserverstärkten Kunststoffes auf. Besonders bevorzugt weisen die Fasern des faserverstärkten Kunststoffs einen Anteil von 65 - 85 Volumenprozent am Gesamtvolumen des faserverstärkten Kunststoffes auf. Erst durch diesen Faseranteil wird die erforderliche Biegesteifigkeit sowie Gewichts- und Volumenreduktion erzeugt. Diese hohen Faseranteile sind nur durch die Verwendung von Endlosfasern zu realisieren. Die Faseranteile von faserverstärkten Bauteilen mit Kurz- oder Langfasern liegen deutlich unter diesem Wert und weisen entsprechend nicht die vorteilhaften Werte bei Biegesteifigkeit und Materialgewicht auf.

Durch die Verstärkungsfasern weisen die Netzstrippen eine höhere Biegesteifigkeit im Vergleich zum Stand der Technik auf. Es ist jedoch auch denkbar eine entsprechende Biegesteifigkeit durch einen geringeren Fasergehalt in Kombination mit steiferen Fasern und oder steiferem Matrixkunststoff zu erreichen oder durch eine größere Dicke der Netzstrippen zu realisieren. In diesem Fall wäre darauf zu achten, dass die gewählte Materialkombination und Netzstrippendicke keinen Gewichtsnachteil für das Zaunnetz mit sich bringt.

Gemäß einer weiteren Ausführungsform beträgt das Gewicht der Netzstrippen jeweils 4 - 6 g. Bevorzugt beträgt das Gewicht der Netzstrippen jeweils 4,5 - 5,5 g, besonders bevorzugt 5 g. Diese Gewichtswerte beziehen sich auf eine Länge der Netzstrippen von 1,05 m und eine Dicke von 1,5 mm. Eine vergleichbare Netzstrippe aus dem Stand der Technik wiegt etwa 8 g. Zu dieser Gewichtsreduktion tritt hinzu, dass durch die steiferen Netzstrippen der Erfindung pro Längeneinheit des Zaunnetzes weniger Netzstrippen für einen stabilen Weidezaun benötigt werden. Außerdem wird durch den kleineren Durchmesser der Netzstrippen weniger Material zur Verbindung der Netzstrippen und Netzlitzen benötigt. Damit wird für das Zaunnetz in Summe eine signifikante Gewichtseinsparung von 15 - 35 % gegenüber dem Stand der Technik ermöglicht.

Gemäß einer weiteren Ausführungsform beträgt die Dicke der Netzstrippen 1 - 3 Millimeter. Bevorzugt beträgt die Dicke der Netzstrippen 1,5 - 2,0 Millimeter, besonders bevorzugt 1,7 - 1,9 Millimeter. Durch diese Netzstrippendicke kann im Vergleich zu den Polyamidstrippen aus dem Stand der Technik eine Dickenreduktion um ca. 50 % erzielt werden. Damit wird das Zaunnetz auch im aufgerollten Zustand maßgeblich kompakter. Diese Volumeneinsparung wirkt sich wiederum vorteilhaft auf die Transportfähigkeit des Zaunnetzes aus.

Die geringere Dicke wirkt sich außerdem positiv auf das Befestigungsmittel aus. In der Ausführung einer Kunststoffumspritzung kann eine Umspritzung mit weniger Umspritzungsmaterial erreicht werden.

Gemäß einer bevorzugten Ausführungsform weisen die Netzstrippen eine Ummantelung aus Kunststoff, bevorzugt Polyethylen, Polyamid oder Polypropylen auf, welche die gesamte zylindrische Mantelfläche der Netzstrippe bedeckt. Bei Profilen aus faserverstärktem Kunststoff mit Endlosfasern kann es vorkommen, dass sich einzelne Faserenden aus dem Matrixkunststoff lösen. Diese stellen ein entsprechendes Verletzungsrisiko beim Berühren dar. Um dieses Risiko zu minimieren, kann eine Ummantelung verwendet werden. Die Ummantelung bedeckt, bevorzugt die gesamte zylindrische Mantelfläche der Netzstrippen. Bevorzugt sind auch die Grundflächen der zylinderförmigen Netzstrippen mit der Ummantelung beschichtet. Die Grundflächen stellen die Schnittflächen eines endlos pultrudierten, zylindrischen Profils dar, welches in einzelne Netzstrippen in der gewünschten Länge geschnitten wird. Sofern sowohl die Mantelfläche als auch die Grundflächen mit der Ummantelung versehen sind, ist die gesamte Oberfläche der Netzstrippe mit der Ummantelung beschichtet. Durch die Beschichtung mit der Ummantelung werden etwaige abstehende Faserenden von der Ummantelung umschlossen und können nicht mehr aus dem Kunststoff herausragen und damit für Verletzungen sorgen. Die Ummantelung weist bevorzugt eine Dicke von 0,1 - 0,25 mm auf.

Alternativ kann die Ummantelung auch eine Dicke von 0,5 - 1 mm aufweisen. Damit wird die Netzstrippe zwar schwerer aber auch sehr viel steifer. Bevorzugt wird dieser Ausführungsform mit einem höheren Anteil an Verstärkungsfasern kombiniert. Besonders bevorzugt wird diese Ausführungsform zusätzlich oder alternativ mit einer dickeren Netzstrippe kombiniert. Bevorzugt beträgt die Netzstrippendicke in dieser Ausführungsform 1,5 - 3 mm. Bevorzugt weisen die Fasern des faserverstärkten Kunststoffs einen Anteil von 65 - 85 Volumenprozent am Gesamtvolumen des faserverstärkten Kunststoffes auf. Die besonders hohe Steifigkeit der Netzstrippen in dieser Ausführungsform führt zu einer besonders stabilen Aufspannung der Netzmaschen. Dies reduziert die Gefahr für Wildtiere sich im Zaunnetz zu verfangen massiv. Ggf. ergibt sich in dieser Ausführungsform je nach Merkmalskombination nur ein kleiner oder gar kein Gewichtsvorteil im Vergleich zu bekannten Zaunnetzen, was aber für die hohe Stabilität dieser Ausführungsform in Kauf genommen wird. Insbesondere eignet sich dieser Variante auch für eine dauerhaftere Umzäunung, welche seltener bewegt werden muss.

Gemäß einer weiteren Ausführungsform ist die Ummantelung der Netzstrippen farbig und/oder reflektierend. Dies erhöht die Sichtbarkeit des Zaunnetzes. Während eine farbige Ausgestaltung die Sichtbarkeit bei Tageslicht erhöhen kann, erhöht eine reflektierende Ausgestaltung die Sichtbarkeit auch bei schlechteren Lichtverhältnissen. Die Kombination mit einer farbigen und reflektierenden Ausgestaltung kann die Sichtbarkeit bei nahezu allen Lichtverhältnissen verbessern. Um die Ummantelung farbig auszugestalten, ist eine Beigabe des Farbstoffes nur in den Ummantelungskunststoff im Vergleich zur Einfärbung des gesamten Matrixkunststoff vorteilhaft, da für die dünne Ummantelungsschicht bereits eine geringere Menge des vergleichsweise teuren Farbstoffes ausreichend ist, um die gesamte Netzstrippe farbig auszugestalten. Entsprechendes gilt für Zusätze, die eine reflektierende Wirkung im Kunststoff aufweisen. Sofern für die Herstellung der Netzstrippen ein Towpreg verwendet wird, welches bereits mit Polyethylen, Polyamid oder Polypropylen oder einem anderen Kunststoff, ummantelt ist, ist es denkbar die Zusätze für die farbige und/oder reflektierende Wirkung direkt dieser Ummantelung des Towpregs beizumischen. Es ist aber auch möglich das Towpreg mit einer zweiten farbigen und/oder reflektierenden Ummantelung zu versehen.

Gemäß einer weiteren Ausführungsform ist zwischen zwei benachbarten Netzstrippen zumindest einen Netzzwischenlitze angeordnet, welche parallel zu den Netzstrippen und quer zu den horizontalen Netzlitzen verläuft und an den Kreuzungspunkten mit den horizontalen Netzlitzen verbunden ist. Bevorzugt ist in dieser Ausführungsform der Abstand der Netzstrippen zueinander größer, sodass sich mit den zusätzlichen Netzzwischenlitzen dieselbe Maschengröße des Zaunnetzes ergibt. In anderen Worten ist in dieser Ausführungsform nicht jede quer verlaufende Verbindung der Netzlitzen als verstärkte Netzstrippe ausgeführt. Vielmehr sind einige der Querverbindungen als einfache Netzzwischenlitzen ausgeführt, welche aus demselben Material, wie die horizontal verlaufende Netzlitzen, bestehen können. Ein entsprechendes Zaunnetz mit effektiv weniger Netzstrippen weist im Vergleich zu einer ausschließlichen Verwendung von Netzstrippen im engeren Abstand eine leicht reduzierte Stabilität auf. Dies kann aber aufgewogen werden durch einen Kostenvorteil in der Herstellung, da weniger der vergleichsweise teuren Netzstrippen benötigt werden. Diese Variante kann insbesondere für Anwendungen verwendet werden, bei denen die Stabilität und Biegesteifigkeit weniger relevant ist, gleichzeitig aber ein besonders leichtes und kompaktes Zaunnetz benötigt wird. Bei dieser Ausführungsform ist es zum Beispiel denkbar, bei konstanter Maschenweite jede zweite, dritte, vierte, fünfte oder sechste quer verlaufende Verbindung als Netz Strippe auszuführen und die dazwischenliegenden Querverbindungen als Netz zwischen Litzen. Durch Anpassung der Maschenweite und Auswahl der Anteile von Netzstrippen und Netzzwischenlitzen im Zaunnetz kann eine optimale Abwägung zwischen Stabilität, Kosten und Packmaß für den jeweiligen konkreten Anwendungsfall erreicht werden.

Die erfindungsgemäße Aufgabe wird außerdem gelöst durch einen mobilen Weidezaun zumindest umfassend zumindest ein Zaunnetz nach einer der vorhergehenden Ausführungsform und zumindest zwei Zaunpfähle. Das Zaunnetz wird an den Zaunpfählen befestigt und die Zaunpfähle mit Erdnägeln oder anderen Befestigungsmitteln im Boden verankert. Um eine weitere Gewichtseinsparung zu erzielen und den Weidezaun noch stabiler und leichter auszuführen, ist es auch denkbar, dass die Zaunpfähle zumindest teilweise aus einem faserverstärkten Verbundwerkstoff bestehen. Hierbei ist es bevorzugt, wenn der faserverstärkte Verbundwerkstoff der Zaunpfähle ebenfalls Endlosfasern aufweist. Bevorzugt bestehen die Zaunpfähle aus einem Hohlprofil mit rundem Querschnitt. Bevorzugt besteht das Hohlprofil vollständig aus dem faserverstärkten Verbundwerkstoff mit den Endlosfasern. Bevorzugt weist das Hohlprofil des Zaunpfahls außenseitig ebenfalls eine Ummantelung aus Polyamid, Polypropylen oder Polyethylen auf. Auch hier lassen sich damit etwaige abstehende Fasern umwandeln und einbetten, sodass die Verletzungsgefahr verringert wird. Dabei ist es ebenfalls denkbar, die Zaunpfähle farbig oder reflektierend auszuführen. Dies kann ebenfalls durch eine Einbringung eines Farbstoffes oder eines reflektierenden Materials in die Ummantelung erreicht werden. Auch ist es denkbar, dass der Zaunpfahl aus einem lichtdurchlässigen Kunststoff besteht und im Innenraum des Hohlprofils eine Leuchtvorrichtung angeordnet ist. Dies kann zusätzlich zu einer farbigen und/oder reflektierenden Ausgestaltung der Netzstrippen die Sichtbarkeitskargheit des mobilen Weidezauns erhöhen.

Weitere Vorteile, Ziele und Eigenschaften der vorliegenden Erfindung werden anhand nachfolgender Beschreibung der anliegenden Figuren erläutert. Gleichartige Komponenten können in den verschiedenen Ausführungsform gleiche Bezugszeichen aufweisen. Die Figuren zeigen:
- Figur 1: eine Übersichtsdarstellung des Weidezaun 1
- Figur 2: eine Detaildarstellung der Netzstrippe 23 und der Netzlitzen 22 des Zaunnetzes 2
- Figur 3a: eine Querschnittdarstellung der faserverstärkten Netzstrippe 23 mit kreisrunden Querschnitt
- Figur 3b: eine Querschnittdarstellung der faserverstärkten Netzstrippe 23 mit elliptischen Querschnitt
- Figur 4: eine perspektivische Darstellung der faserverstärkten Netzstrippe 23
- Figur 5: eine Übersichtsdarstellung des Weidezaun 1 mit Netzstrippen 23 und Zwischennetzlitzen 25.

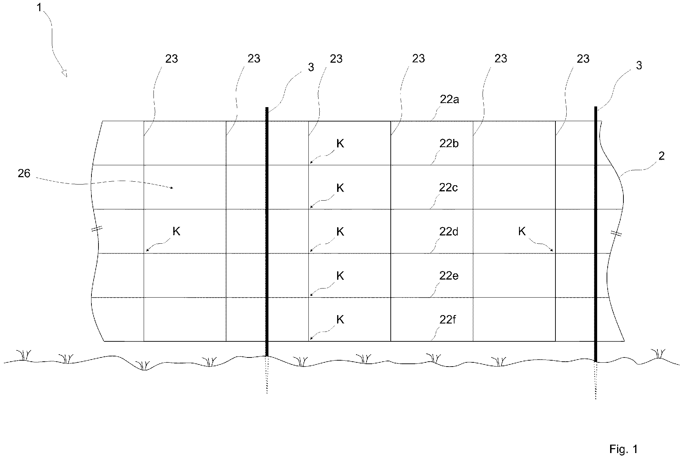

Figur 1 zeigt eine schematische Darstellung eines mobilen Weidezaun 1. Der mobile Weidezaun 1 umfasst ein Zaunnetz 2 und Zaunpfähle 3. Das Zaunnetz 2 besteht aus horizontal verlaufenden Netzlitzen 22a - 22f und quer dazu verlaufenden, in dieser Ausführungsform bevorzugt vertikalen, Netzstrippen 23. Die Netzlitzen 22 und Netzstrippen 23 überkreuzen sich jeweils im Kreuzungspunkt K. Die Netzlitzen 22 und Netzstrippen 23 sind in dem Kreuzungspunkt K miteinander verbunden. Das Zaunnetz 2 wird auf diese Weise durch die Netzlitzen 22 und Netzstrippen 23 aufgespannt und gebildet. In diesem aufgebauten Zustand befindet sich am vertikal gesehen oberen Zaunende die oberste horizontale Netzlitze 22a und am untersten Ende des Zaunnetzes 2, welches dem Boden am nächsten ist, die unterste Netzlitze 22f. Bevorzugt ist der Weidezaun 1 so positioniert, dass die unterste Netzlitze 22f den Boden nicht berührt. In vertikaler Richtung direkt über der untersten Netzlitze 22f ist die vorletzte Netzlitze 22e angeordnet. Diese bildet zusammen mit der obersten Netzlitze 22a und allen Netzlitzen 22, die zwischen der obersten Netzlitze 22a und der vorletzten Netzlitze 22e angeordnet sind, die oberen Netzlitzen 22a-22e. Diese oberen Netzlitzen 22a-22e weisen bevorzugt ein stromführendes Filament auf, während die unterste Netzlitze 22f bevorzugt kein stromführendes Filament aufweist.

Die Netzlitzen 22 und Netzstrippen 23 bilden durch ihre Überkreuzungen Zaunmaschen 26. Die Zaunmaschen 26 sind bevorzugt viereckig. Bei einer senkrechten Ausführung der Netzstrippen 23 und horizontalen Anordnung der Netzlitzen 22 ergeben sich bevorzugt rechteckige oder quadratische Netzmaschen 26. Das Zaunnetz 2 wird an den Zaunpfählen 3 befestigt. Bevorzugt wird das Zaunnetz 2 an den Zaunpfählen 3 eingehakt. Alternativ können die Zaunpfähle alternierend durch die Zaunmaschen gefädelt werden und das Zaunnetz 2 nur an einem oberen und ggf. auch am unteren Ende am Zaunpfahl 3 befestigt werden. Ein stabile stehender Weidezaun 1 kann zum einen durch die Verwendung vieler Zaunpfähle 3 in kleinen Abständen zueinander erreicht werden. Dies bietet allerdings den Nachteil, dass die vergleichsweise teuren Zaunpfähle 3 den Gesamtpreis des Weidezauns 1 erhöhen und auch das Gesamtgewicht des Weidezauns 1 erhöhen. Eine starke Verspannung des Zaunnetzes 2 zwischen benachbarten Zaunpfählen 3 ist je nach Abstand der benachbarten Zaunpfähle 3 und den Bodenverhältnissen nur schwierig zu realisieren. Durch die erfindungsgemäßen Netzstrippen 23 des erfindungsgemäßen Zaunnetzes 2 kann die gewünschte Stabilität auch in diesen Fällen erreicht werden.

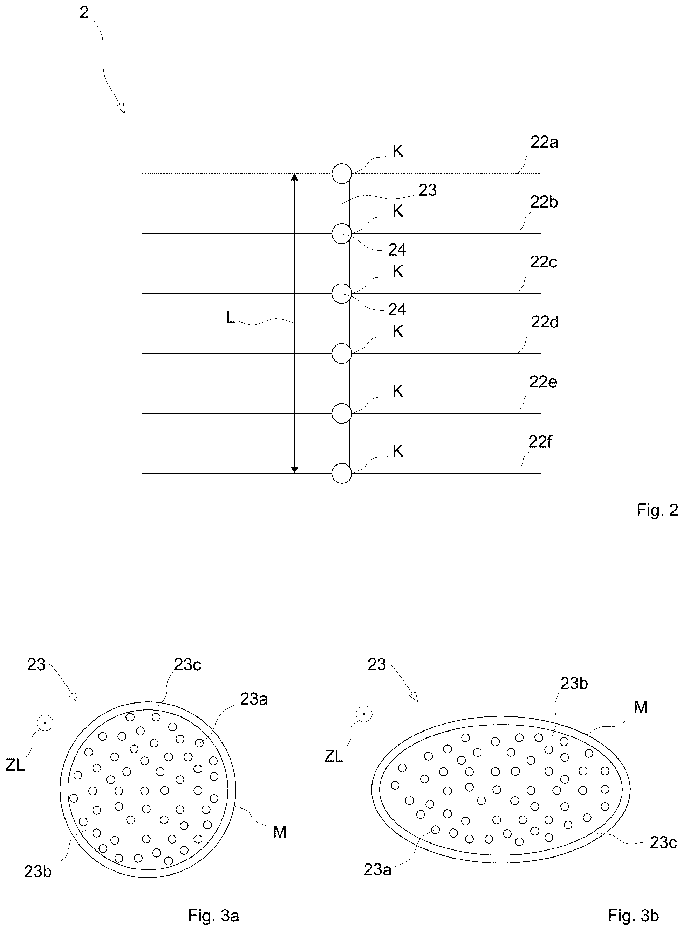

Figur 2 zeigt eine Detailaufnahme der horizontalen Netzlitzen 22a-22f und einer vertikal verlaufenden Netzstrippe 23. Die Netzstrippe 23 erstreckt sich von der obersten Netzlitze 22a bis zu der untersten Netzlitze 22 f. Bevorzugt entspricht die gesamte Länge L der Netzstrippe 23 dem Abstand der obersten Netzlitze 22a zu der untersten Netzlitze 22f. Es ist jedoch auch denkbar, dass die Netzstrippe 23 einen gewissen Überstand über die oberste Netzlitze 22a und/oder die unterste Netzlitze 22f aufweist. An den Kreuzungspunkten K der betreffenden Netzstrippe 23 mit den verschiedenen Netzlitzen 22a - 22f, ist die Netzstrippe 23 an der jeweiligen Netzlitze 22a - 22f befestigt. Bevorzugt erfolgt diese Befestigung im Kreuzungspunkt K durch eine gemeinsame Umspritzung der Netzstrippe 23 mit der betreffenden Netzlitze 22 mit einem Kunststoff. Es sind jedoch auch andere Befestigungsmittel denkbar. Insbesondere denkbar wäre auch ein Verkleben, Heißverschweißen oder Verweben/Verknoten der Netzstrippe mit der betreffenden Netzlitze. Die Verstärkungsfasern (hier nicht gezeigt) des faserverstärkten Kunststoffes der Netzstrippe 23, erstrecken sich über die gesamte Länge L der Netzstrippe 23 und verlaufen bevorzugt parallel zur Längsachse der Netzstrippe 23.

Figur 3a zeigt einen Querschnitt der Netzstrippe 23 in Aufsicht. Die Netzstrippe 23 ist zylinderförmig und weist eine kreisförmige Grundfläche in dieser Ausführungsform auf. Die Zylinderlängsachse ZL ist in der Darstellung in Figur 3a senkrecht zur Papierebene angeordnet. Die Zylinderlängsachse ZL der zylinderförmigen Strippe 23 ist bevorzugt im aufgestellten Weidezaun vertikal im Zaunnetz 2 angeordnet. Es ist aber auch denkbar, die Netzstrippen 23 nicht genau vertikal auszurichten, sondern auch in einem anderen Winkel zu den horizontal verlaufenden Netzlitzen 22 anzuordnen. In der Querschnittdarstellung ist der faserverstärkte Kunststoff mit den Verstärkungsfasern 23a und dem Matrixkunststoff 23b dargestellt. Die Verstärkungsfasern 23a sind dabei parallel zur Zylinderlängsachse ZL der Netzstrippe 23 ausgerichtet. Die Verstärkungsfasern 23a erstrecken sich über die gesamte Länge der Netzlitze 23 entlang der Zylinderlängsachse ZL. Der Matrixkunststoff 23b umschließt die Verstärkungsfasern 23a vollständig, sodass die diese in den Matrixkunststoff 23b eingebettet sind. Der mit den Verstärkungsfasern 23a verstärkte Matrixkunststoff 23 b weist insgesamt eine runde, zylinderförmige Form auf. Diese Zylinderform ist bevorzugt an ihrer Mantelfläche M mit einer Ummantelung 23c versehen. Die Ummantelung 23c kann entweder ausschließlich auf der Mantelfläche M angebracht sein, oder auch zusätzlich auf den Grundflächen G der zylinderförmigen Netzstrippe 23 angeordnet sein. Es ist aber auch denkbar, die Netzstrippe 23 ohne Ummantelung 23c auszuführen. Diese Ausführungsform mit kreisförmiger Grundfläche der Netzstrippe 23 stellt eine besonders effektive Ausformung dar, um einen möglichst großen Volumenanteil von faserverstärktem Kunststoff in einem möglichst geringen Durchmesser der Netzstrippe 23 zu realisieren.

Figur 3b zeigt ebenfalls einen Querschnitt senkrecht zur Zylinderlängsachse ZL durch die zylinderförmige Netzstrippe 23. In dieser Ausführungsform besitzt die Netzstrippe 23 eine elliptische Grundfläche G. Insgesamt hat die Netzstrippe 23 damit in dieser Ausführungsform eine elliptische Zylinderform. Auch in diesem Fall umfasst der faserverstärkte Kunststoff der Netzstrippe 23 Verstärkungsfasern 23a und einen Matrixkunststoff 23b, in den die Verstärkungsfasern 23a eingebettet sind. Optional kann die Netzstrippe 23 auch eine Ummantelung 23c aufweisen, welche bevorzugt auf der gesamten Mantelfläche M des elliptischen Zylinders und gegebenenfalls zusätzlich auf den senkrecht dazu angeordneten Grundflächen G des elliptischen Zylinders aufgebracht ist. Auch in dieser Ausführungsform sind die Verstärkungsfasern 23a parallel zur Zylinderlängsachse ZL der Netzstrippe 23 angeordnet. Die Verstärkungsfasern 23a erstrecken sich dabei über die gesamte Länge der Netzstrippe 23 entlang der Zylinderlängsachse ZL.

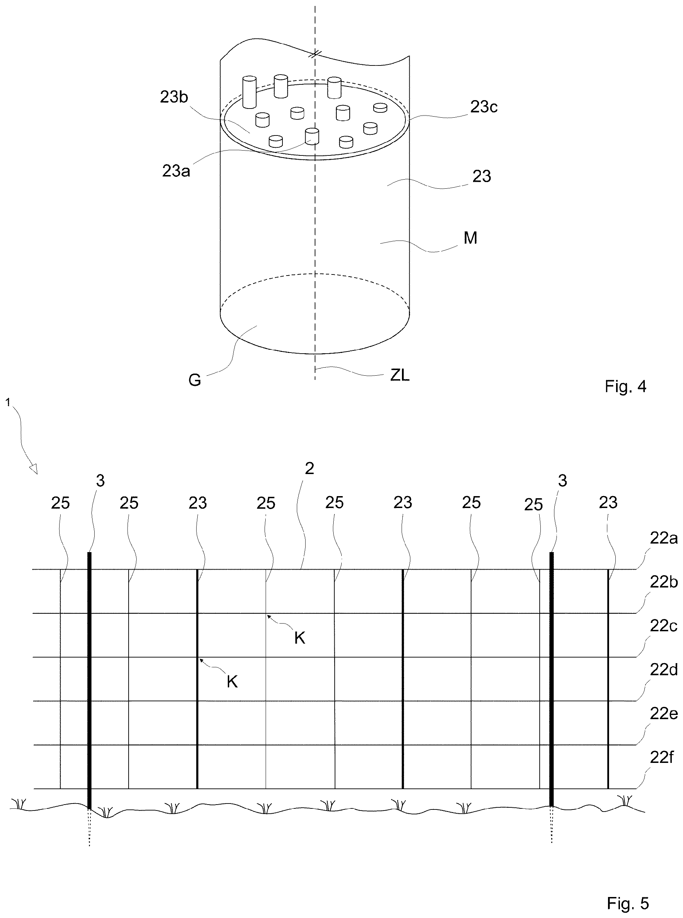

Figur 4 zeigt eine perspektivische Darstellung des unteren Endes der Netzstrippe 23. Die zylinderförmige Netzstrippe 23 weist hierbei den faserverstärkten Kunststoff auf mit den Verstärkungsfasern 23a und dem Matrixkunststoff 23b. Die Verstärkungsfasern 23a sind alle parallel zur Zylinderlängsachse ZL im Matrixkunststoff 23b eingebettet. Die Mantelfläche M des Zylinders ist bevorzugt mit der Beschichtung 23c bedeckt. Am unteren Ende der Netzstrippe 23 ergibt sich die Grundfläche G, welche zum Beispiel durch das Abtrennen eines pultrudierten Endlosstrangs entsteht. Alternativ ist auch denkbar, die Netzstrippe 23 direkt als zylindrisches Profil mit der gewünschten Länge entlang der Zylinderlängsachse ZL auszuformen. In einer Ausführungsform kann auch die Grundfläche G mit der Ummantelung 23c versehen sein. In diesem Fall ist die gesamte Zylinderoberfläche der Netzstrippe 23 mit der Ummantelung 23c versehen. Dies ist insbesondere vorteilhaft, da an den Schnittkanten eines pultrudierten Endlosprofils die Verstärkungsfasern 23a direkt bis an die Schnittkante der Grundfläche G herangetragen. In diesem Fall kann es besonders leicht passieren, dass einzelne Verstärkungsfasern 23a aus dem Matrixkunststoff 23b ausfransen, abstehen und damit dann ein Verletzungsrisiko beim Berühren darstellen. Eine Beschichtung der Grundflächen mit der Ummantelung 23c verhindert dies.

Figur 5 zeigt eine Darstellung eines mobilen Weidezauns 1 mit einem Zaunnetz 2 und Zaunpfählen 3 in einer Ausführungsform mit Netzzwischenlitzen 25. Das Zaunnetz 2 entspricht mit den horizontal verlaufenden Netzlitzen 22a - 22f und den quer dazu verlaufenden Netzstrippen 23 den bisherigen Ausführungsformen. Zusätzlich zu diesem quer verlaufenden Netzstrippen 23 sind in dieser Ausführungsform jedoch noch Netzzwischenlitzen 25 angeordnet. Diese Netzzwischenlitzen 25 verlaufen parallel zu den Netzstrippen 23. Sie verbinden ebenfalls sämtliche horizontal verlaufenden Netzlitzen 22a - 22f miteinander. Wie auch bei den Netzstrippen 23, sind die Netzzwischenlitzen 25 an ihren Kreuzungspunkt K mit den jeweiligen Netzlitzen 22a - 22f verbunden. Bevorzugt erfolgt dies durch dasselbe Befestigungsmittel 34 mit dem auch die Netzstrippen 23 mit den Netzlitzen 22 verbunden sind. Sofern unterschiedliche Materialien und Kunststoffarten für die Netzstrippe 23 und die Netzzwischenlitzen 25 verwendet werden, ist es jedoch auch denkbar, hier unterschiedliche Befestigungsmittel zu verwenden, um eine bestmögliche Verbindungswirkung zu erzielen. In dieser Ausführungsform wird die ursprüngliche Netzmaschengröße des Zaunnetzes 2, welche durch die horizontalen Netzlitzen 22a - 22f und die quer dazu verlaufenden Netzstrippen 23 begrenzt wird, in kleinere Netzmaschen durch die Netzzwischenlitzen 25 aufgeteilt. In dem hier gezeigten Ausführungsbeispiel sind zwischen zwei parallelen und benachbarten Netzstrippen 23 noch zwei Netzzwischenlitzen 25 angeordnet, sodass die Maschenbreite durch die Anbringung der Netzzwischenlitzen 25 auf ein Drittel der ursprünglichen Maschenbreite verkleinert wird. Es ist jedoch auch jede andere Anordnung und Größenverteilung denkbar. Zum Beispiel ist es denkbar, dass zwischen zwei benachbarten Netzstrippen 23 nur eine oder auch drei, vier, fünf oder noch mehr Netzzwischenlitzen 25 angeordnet sind.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Weidezaun
- 2: Zaunnetz
- 3: Zaunpfahl
- 22: Netzlitzen
- 22a: oberste Netzlitze
- 22f: unterste Netzlitze
- 23: Netzstrippen
- 23a: Fasern
- 23b: Matrixkunststoff
- 23c: Ummantelung
- 24: Befestigungsmittel
- 25: Netzzwischenlitze
- K: Kreuzungspunkt
- L: Länge der Netzstrippen
- ZL: Zylinderlängsachse
- M: Mantelfläche
- G: Grundfläche

## Patentansprüche

1. Zaunnetz (2) für einen mobilen Weidezaun (1), wobei das Zaunnetz (2) mehrere horizontale Netzlitzen (22) umfasst, welche zueinander parallel angeordnet sind und sich über die gesamte horizontale Länge des Zaunnetzes (2) erstrecken und das Zaunnetz (2) weitergehend mehrere quer zu den Netzlitzen (22) verlaufende Netzstrippen (23) umfasst, welche zueinander parallel angeordnet sind und sich von der obersten (22a) bis zur untersten Netzlitze (22f) erstrecken, wobei die Netzlitzen (22) und -strippen (23) an den Kreuzungspunkten (K) der Netzlitzen (22) mit den Netzstrippen (23) miteinander verbunden sind und die Netzlitzen (22) zumindest aus einem flexiblen Kunststoffgarn bestehen
**dadurch gekennzeichnet, dass**
die Netzstrippen (23) aus einem faserverstärkten Kunststoff bestehen, wobei sich die Fasern (23a) über die gesamte Länge (L) der Netzstrippen (23) erstrecken.

2. Zaunnetz (2) nach Anspruch 1,
**dadurch gekennzeichnet, dass**
die Fasern (23a) des faserverstärkten Kunststoffs Glasfasern, Carbonfasern, Basaltfasern, Hanffasern und/oder Flaxfasern sind.

3. Zaunnetz (2) nach Anspruch 1 oder 2,
**dadurch gekennzeichnet, dass**
der Matrixkunststoff (23b) des faserverstärkten Kunststoffs ein duroplastischer Kunststoff oder ein thermoplastischer Kunststoff ist.

4. Zaunnetz (2) nach einem der vorhergehenden Ansprüche,
**dadurch gekennzeichnet, dass**
die Fasern (23a) des faserverstärkten Kunststoffs einen Anteil von 50 - 85 Vol% am Gesamtvolumen des faserverstärkten Kunststoffs aufweisen.

5. Zaunnetz (2) nach einem der vorhergehenden Ansprüche,
**dadurch gekennzeichnet, dass**
das Gewicht der Netzstrippen (23) jeweils 4 - 6 g beträgt.

6. Zaunnetz (2) nach einem der vorhergehenden Ansprüche,
**dadurch gekennzeichnet, dass**
die Dicke der Netzstrippen (23) 1 - 3 mm beträgt.

7. Zaunnetz (2) nach einem der vorhergehenden Ansprüche,
**dadurch gekennzeichnet, dass**
die Netzstrippen (23) eine Ummantelung (23c) aus Kunststoff, bevorzugt PE, PA oder PP, aufweisen, welche die gesamte zylindrische Mantelfläche (M) der Netzstrippen (23) bedeckt.

8. Zaunnetz (2) nach einem der vorhergehenden Ansprüche,
**dadurch gekennzeichnet, dass**
die Ummantelung der Netzstrippen farbig und/oder reflektierend ist.

9. Zaunnetz (2) nach einem der vorhergehenden Ansprüche,
**dadurch gekennzeichnet, dass**
zwischen zwei benachbarten Netzstrippen (23) zumindest eine Netzzwischenlitze (25) angeordnet ist, welche parallel zu den Netzstrippen (23) und quer zu den horizontalen Netzlitzen (22) verläuft und an den Kreuzungspunkten (K) mit den horizontalen Netzlitzen (22) mit diesen verbunden ist.

10. Mobiler Weidezaun (1) zumindest umfassend zumindest ein Zaunnetz (2) nach einem der vorhergehenden Ansprüche und zumindest zwei Zaunpfähle (3).
